# EUROPEAN PATENT SPECIFICATION

(11) **EP 3 345 733 B1**
(45) Date of publication and mention of the grant of the patent: **24.01.2024**
(21) Application number: 18158802.1
(22) Date of filing: 31.08.2006
(51) Int. Cl.: B29B 9/06, B29B 9/12, B29B 9/16, B29B 7/74, B29B 7/92, B29B 13/06, B29C 48/14, B29C 48/255, F26B 25/00, B29C 48/00, B29C 48/04, B29C 48/05, B29C 48/91, B29K 1/00, B29L 31/00, B29K 101/00, B29K 311/10, B29K 711/14

(54) **METHOD FOR PELLETIZING BIOMATERIAL COMPOSITES**
VERFAHREN ZUM PELLETIEREN VON BIOMATERIAL-VERBUNDSTOFFEN
PROCÉDÉ DE PELLÉTISATION DE COMPOSITES DE BIOMATÉRIAUX

(30) Priority: 31.08.2005 US 712398 P
(43) Date of publication of application: 11.07.2018
(62) Divisional of application: 06802693.9
(73) Proprietor: Maag Gala, Inc., Eagel Rock VA 24085 (US)
(72) Inventor: Martin, J. Wayne, Buchanan, VA 24066 (US); Wright, Roger B., Staunton, VA 24401 (US); Mann, Robert G., Covington, VA 24426 (US)
(74) Representative: Thoma, Michael

(56) References cited:
- WO-A1-2005/051623
- WO-A2-2006/127698
- DE-A1- 10 209 149
- DE-A1- 10 214 654
- DE-A1- 10 304 097
- US-A- 4 480 061
- US-A1- 2005 056 961

## Description

### FIELD OF THE INVENTION

The present invention generally relates to a method utilizing underwater pelletizing and subsequent accelerated drying of polymer biomaterial composites and foamed polymer biomaterial composites to produce pellets with significantly reduced moisture content. More specifically, the present invention relates to a method for underwater pelletizing polyolefins, such as polyethylene and polypropylene, substituted polyolefins, such as polyvinyl chloride and polystyrene, polyesters, polyamides, polyurethanes, polycarbonates or copolymers of the foregoing, which contain a solid or semi-solid biomaterial component, such as polysaccharides, including cellulosics and starches, or proteinaceous material, including polypeptides, including expandable composites, with subsequent accelerated drying of those pellets and granules, expandable or otherwise, in a manner such that the moisture content of those pellets or granules is significantly reduced. The pelletization and drying process described herein produces pellets and granules having a desired level of moisture approaching one per cent (1%) or less.

### BACKGROUND OF THE INVENTION

The wood products industry has had extensive focus on composites of polymers and wood products for many years. As high quality resources for decorative trim and exposed wood surfaces have diminished over the years, there has been considerable effort to find economical alternatives. Much of that interest has involved polyethylene, polypropylene, and polyvinyl chloride composites. The latter of these has also been investigated extensively for use as a foamed composite with wood flour and various inorganic fillers.

More recent considerations have extended the areas of interest to construction materials such as decking, to recycle interests for the paper and wood pulp industry, and to waste byproducts from fermentation processes. The continuous upsurge of petroleum prices has led to additional considerations for sources of recyclable plastics as well. Further interests have developed in landscaping applications, automobile components, and for pet odor control applications.

A major concern is the control of moisture leading to the final product. High moisture content leads to potential loss of structural integrity in the finished product due to stress cracking and bubble formation. The surface finish may also be compromised by uncontrolled moisture levels. Also of concern is the temperature constraints imposed by the use of cellulosics which are particularly prone to charring with elevation of the processing temperature. This concern has limited the choice of plastic materials from which the composites can be made.

Drying of the biomaterials is time-consuming and economically expensive. This is further complicated by the likelihood of moisture uptake by the bio-components of the composite on storage necessitating costly humidity control or water-impermeable packaging. Processing which leads to uptake of environmental humidity or involves direct exposure to water, therefore, has not been attractive to the industry.

Production throughput suffers from rate constraints by the need to reduce the water content before and/or during the formulating process. To avoid unnecessary storage and alleviate undesirable moisture-uptake, many industries have resorted to composite formulation followed immediately by extrusion or other production techniques to form the final product.

It is with these concerns that this invention has taken focus to provide a technique to form the polymer biomaterial composite without unnecessary preliminary drying of the components and to expedite processing to prepare intermediate pellets -suitably dry for later processing, transportation, or multiple-step processing as required. This process involves a continuous production sequence of extrusion, pelletization underwater, and accelerated drying to accomplish the desired low moisture content composite.

### RELATED PRIOR ART

### U. S. Patents

| | | | |
|---|---|---|---|
| 5,441,801 | Aug. 1995 | Deaner et al. | 428/326 |
| 5,563,209 | Oct. 1996 | Schumann et al. | 524/709 |
| 5,714,571 | Feb. 1998 | Al Ghatta et al. | 528/308.2 |
| 5,746,958 | May 1998 | Gustafsson et al. | 264/115 |
| 5,847,016 | Dec. 1998 | Cope | 521/84.1 |
| 5,938,994 | Aug. 1999 | English et al. | 264/102 |
| 5,951,927 | Sep. 1999 | Cope | 264/54 |
| 6,015,612 | Jan. 2000 | Deaner et al. | 428/326 |
| 6,066,680 | May 2000 | Cope | 521/79 |
| 6,083,601 | Jul. 2000 | Prince et al. | 428/71 |
| 6,245,863 | Jun. 2001 | Al Ghatta | 525/437 |
| 6,255,368 | Jul. 2001 | English et al. | 524/l3 |
| 6,280,667 | Aug. 2001 | Koenig et al. | 264/68 |
| 6,498,205 | Dec. 2002 | Zehner | 524/14 |
| 6,624,217 | Sep. 2003 | Tong | 524/9 |
| 6,632,863 | Oct. 2003 | Hutchison et al. | 524/13 |
| 6,685,858 | Feb. 2004 | Korney, Jr. | 264/102 |
| 6,706,824 | Mar. 2004 | Pfaendner et al. | 524/437 |
| 6,737,006 | May 2004 | Grohman | 264/211.21 |
| 6,743,507 | Jun. 2004 | Barlow et al. | 428/393 |
| 6,762,275 | Jul. 2004 | Rule et al. | 528/271 |
| 6,790,459 | Sep. 2004 | Andrews et al. | 428/36.92 |
| 6,797,378 | Sep. 2004 | Shimizu | 428/394 |

### Published U.S. Patent Applications

| | | | |
|---|---|---|---|
| 2002/0106498 | Aug. 2002 | Deaner et al. | 428/292.4 |
| 2003/0025233 | Feb. 2003 | Korney, Jr. | 264/102 |
| 2004/0126568 | Jul. 2004 | Deaner et al. | 428/326 |
| 2004/0140592 | Jul. 2004 | Barlow et al. | 264/523 |
| 2004/0169306 | Sep. 2004 | Crews et al. | 264/140 |
| 2005/0075423 | Apr. 2005 | Riebel et al. | 524/17 |

### Other Pending U.S. Patent Applications

| | | | |
|---|---|---|---|
| 20050110182 | May 2005 | Eloo | 264/69 |
| 20050110184 | May 2005 | Eloo | 264/143 |

### Foreign Patent Documents

| | | |
|---|---|---|
| 1467246 | Jan. 2004 | CN |
| 1470568 | Jan. 2004 | CN |
| 1515617 | Jul. 2004 | CN |
| 1603088 | Apr. 2005 | CN |
| 2005/035134 | Feb. 2005 | JP |
| 2005/053149 | Mar. 2005 | JP |
| 2005/060556 | Mar. 2005 | JP |
| 2005/088461 | Apr. 2005 | JP |
| 2005/097463 | Apr. 2005 | JP |

### Other References

Wood-Filled Plastics by Lilli Manolis Sherman, Senior Editor, July 2004 Plastics Technology

A method according to the preamble of claim 1 is known from DE 10 304 097 A1 describing the manufacturing of pellets made from a compound material including wooden fibers, wherein the process water temperature is increased to achieve moisture reduction.

Furthermore, document WO 2005/051623 A1 describes a manufacturing process for producing PET pellets and crystallization thereof, wherein air injection into the fluid discharge path of the pelletizer and high pelletization temperatures are applied to achieve self-crystallization to avoid agglomeration of the pellets at a later stage.

### SUMMARY OF THE INVENTION

As used in this application, the term "pellets" is intended to describe the product formed in an underwater pelletizer in its broadest sense and includes granules and any other shaped and sized particles formed in an underwater pelletizer.

The present invention is directed to a pelletizing method according to claim 1 that produces polymeric pellet composites with minimal underwater residence time such that they retain sufficient heat to self-initiate the drying process and ultimately provide sufficiently low moisture levels of less than one per cent (1%) without the requirement for an additional heating step for the polymeric pellet composites prior to additional processing.

Further preferred embodiments are claimed in the dependent claims.

Previous disclosures have demonstrated the effectiveness of pelletization and cooling to obtain suitably dry pellets but typically have avoided exposure to moisture, especially to direct immersion in water, anticipating significant and undesirable uptake of the water by the biomaterials. In accordance with the present invention, it has been discovered that polymer composite pellets can be obtained in an acceptably dry state when subjected to elevated heat conditions and benefit from the reduction of the residence time of the pellets in the water slurry, thus leaving sufficient heat in the pellets to effectively reduce the moisture content within the pellets.

To accomplish a high latent heat, the pellets must be separated from the water as quickly as possible with significant increase in the speed with which they flow from the exit of the underwater pelletizer and into and through the drying apparatus. The pellets exit the dryer retaining much of their latent heat and can be transported as required on conventional vibrating conveyors or similar vibratory or other handling equipment such that with the additional time the desired moisture level is achieved. Storage of the hot pellets in conventional heat retaining containers or heat insulating containers is included in the instant invention that provide time to complete the desired level of drying. The desired moisture level obtained is determined by the permissible levels in processing or production steps to follow and is less than one per cent (1%).

The polymer biomaterial composites which can be pelletized in accordance with the present invention generally include as their basic components a suitable polymer and biomaterial particles. Appropriate additives are also included. The relative percentages of these basic components can vary depending upon the selected polymer and biomaterial particles, but typically have 5% - 95% polymer and 10% - 90% biomaterial particles.

The separation of the pellets from the water and subsequent increase of the pellet speed to the drying apparatus is accomplished by a combination of pressurized injection of air with simultaneous aspiration of the water. Once the cut pellets leave the underwater pelletizer water box in the water slurry, air is injected into the transport pipe leading from the water box to the drying apparatus. The term "air" hereafter is intended to include air, nitrogen or any other suitable inert gas. The injected air serves to aspirate the water into vapor effectively separating it from the pellets. The injected air further increases the speed of transport of the pellets to and ultimately through the dryer. This increase in transport speed is sufficiently rapid to allow the pellet to remain at a temperature hot enough to initiate the drying process for the pellets which may be further dried with transport through a centrifugal dryer. Other conventional methods of drying the pellet with comparable efficiency may be employed by one skilled in the art and are intended to be included herein.

To achieve aspiration of the water and increase the transport speed from the exit of the pelletizer waterbox to the dryer, the air injected must be at very high velocity. In accordance with the present invention, the volume of the injected air should be at least 100 cubic meters per hour based on injection through a valve into a 3.81 cm [1.5 inch] diameter pipe. This flow volume will vary in accordance with throughput volume, drying efficiency, and pipe diameter as will be understood by one skilled in the art.

The rate of the air injection into the slurry piping is preferably regulated through use of a ball valve or other valve mechanism located in the slurry transport pipe after the injection point. Regulation through this valve mechanism allows more control of the residence time for the pellets in the transport pipe and drying apparatus and serves to improve the aspiration of the pellet/water slurry. Vibration is reduced or eliminated in the transport pipe by use of the valve mechanism after the injection point as well.

Regulation of the air injection provides the necessary control to reduce the transport time from the exit of the pelletizer waterbox through the dryer allowing the pellets to retain significant heat inside. Larger diameter pellets do not lose the heat as quickly as do smaller diameter pellets and therefore can be transported at lower velocity than the smaller pellets. Comparable results are achieved by increasing the air injection velocity as pellet diameter decreases as will be understood by one skilled in the art. Reduction of the residence time between the pelletizer waterbox and the dryer exit leaves sufficient heat in the pellets to achieve the desired moisture level. The retention of heat inside the pellet may be enhanced through use of a heat-retaining vibrating conveyor following pellet release from the dryer and/or through the use of conventional storage containers or heat insulating containers as necessary. This method has been discovered to be effective for the polymers herein described. Moisture levels of less than one per cent (1%) may be achieved by the process described herein. Variation of the residence times for polymer and polymer blends may be adjusted as needed to optimize results for the particular formulation as will be understood by one skilled in the art. Additional heating steps are eliminated through use of the process described herein.

### BRIEF DESCRIPTION OF THE DRAWINGS

Figure 1 is a schematic illustration of an underwater pelletizing system, including an underwater pelletizer and centrifugal dryer manufactured and sold by Gala Industries, Inc. ("Gala") of Eagle Rock, Virginia, with air injection and vibrating conveyor.
Figure 2a is a side view schematic illustration of the vibrating conveyor of Figure 1.
Figure 2b is an end view schematic illustration of the vibrating conveyor of Figure 1.

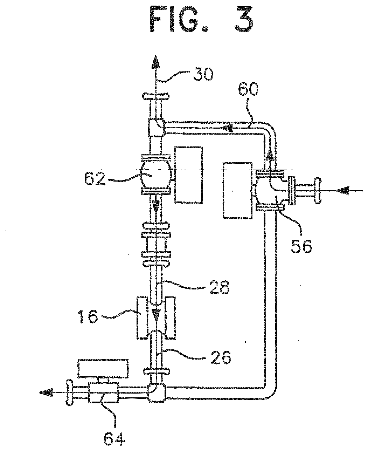

Figure 3 illustrates the components of the underwater pelletizing system shown in Figure 1 during a bypass mode when the process line has been shut down.

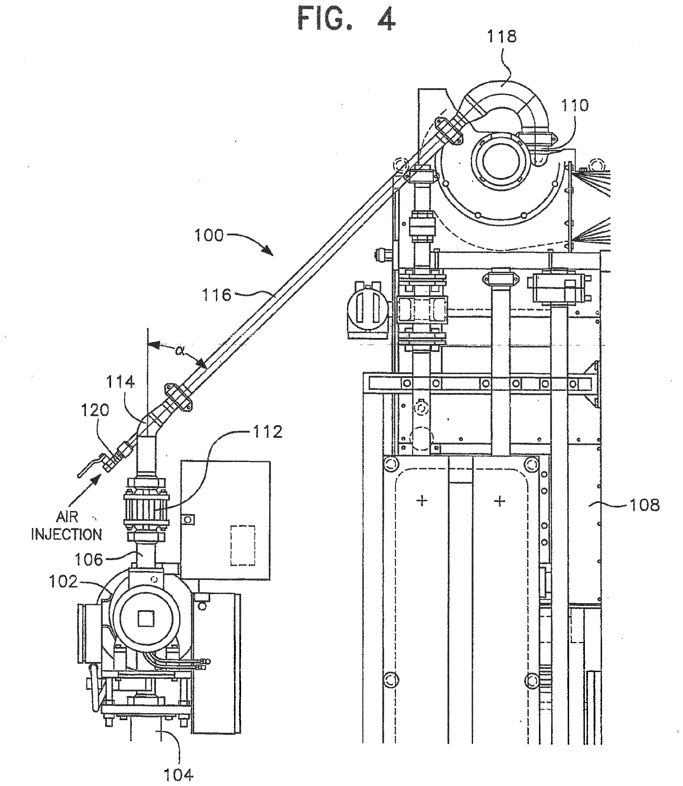

Figure 4 is a schematic illustration showing an apparatus for inert gas injection into the slurry line from the pelletizer to the dryer.
Figure 5 is a schematic illustration showing a preferred apparatus for inert gas injection into the slurry line from the pelletizer to the dryer including an expanded view of the ball valve in the slurry line.

### DETAILED DESCRIPTION OF THE INVENTION

Preferred embodiments of the invention are explained in detail.

Descriptions of the embodiments which follow utilize terminology included for clarification and are intended to be understood in the broadest meaning including all technical equivalents by those skilled in the art. The polymer components set forth for this invention provide those of ordinary skill in the art with detail as to the breadth of the method as disclosed.

Polymer biomaterial composites are typically formulated from fibrous biomaterial(s), a thermoplastic matrix, a coupling agent or stabilizer, lubricants, fillers, colorants, and various processing aids. They may also contain expanding or foaming agents and cross-linking agents as required by the particular end use application. Components of the formulation may be introduced from various recycle processes.

The biomaterial or fibrous components provide the material strength and surface properties for a particular product. The dimensions of the biomaterial or fibrous components are constrained only by the size of the intermediate pellet desired and to achieve the requisite surface characteristics. The moisture uptake and retention of the composite are strongly influenced by the choice of the biomaterial. The thermal stability of the biomaterial component is important in consideration of the polymer matrix material. Care should be taken to choose a polymer with a melt temperature or processing temperature which will not lead to charring or degradation of the biomaterial. Formulations typically include from 10% to 90% biomaterial, and preferably 30% to 70% biomaterial. The balance is made up of the polymer matrix and other components. Extrusion temperatures are less than 220°C and preferably less than 200°C.

Biomaterials include but are not limited to polysaccharides, including cellulosics and starches, and proteinaceous materials, including polypeptides. Exemplary of cellulosics are wood chips, wood laminate, wood veneer, wood flake, wood fibers, wood particles, ground wood, sawdust, coconut shells, peanut shells, straw, wheat straw, cotton, rice hulls or husks, alfalfa, ricegrass, wheat bran, wheat pulp, bean stalks, corn or maize, corn cobs, corn stalks, sorghum or milo, sugarcane, orange juice residue, bagasse, bamboo ash, fly ash, peat moss, kelp, chaff, rye, millet, barley, oats, soybean, coffee residue, leguminous plants, forage grass, and plant fibers including bamboo, palm, hemp, yucca, and jute. Additionally paper products such as computer paper, cardboard, newspapers, magazines, books, milk and drink cartons, and paper pulp find application in this invention.

Examples of starches include potato, sweet potato, cassava, and stover. Proteinaceous materials include fermentation solids, distillers' grains and solids, gluten meal, prolamins from wheat and rye as gliadin, from corn as zein, and from sorghum and millet as kafinin.

The size of the biomaterial particles will vary depending upon whether the particles are fibrous or powder, and on the size and end use of the pellets. The size of fibrous particles can typically range from 10 to 900 microns, with an aspect ratio of from 1 to 50, and more preferably from 2 to 20. For powders, the particle size typically ranges from 15 to 425 microns.

Thermoplastic materials shown in the prior art for use in polymer biomaterial composites include polyethylene or PE, polyvinyl chloride or PVC, polypropylene or PP, and polystyrene or PS with high density polyethylene or HDPE being the most prevalent in usage. Among the formulations for expandable applications, significant focus has been in the area of PVC or chlorinated PVC, CPVC. The choice of materials has often been restricted to those which can be processed at temperatures below the degradation point of the biomaterials.

With careful choice of formulations the variety of polymers can be extended to include polyesters, polyamides, polyurethanes, and polycarbonates. Thermoplastic materials as well as thermoset polymers are within the scope of this invention. The use of thermosets, as with the choices in polymers, requires cautious attention to the cross-linking temperatures to allow post-curing, cross-linking, to be done at temperatures or by chemical reactions not achieved or initiated during the processes within the scope of this invention.

Polyethylenes for use in this invention include low density polyethylene or LDPE, linear low density polyethylene or LLDPE, medium density polyethylene or MDPE, high density polyethylene or HDPE, and ultra-high molecular weight polyethylene or UHMWPE also known as ultra-high density polyethylene UHDPE.

Also within the scope of this invention are olefinics encompassing polypropylene or PP, polyalphaolefins or PAO including polymers and copolymers exemplary of which are polybutene, polyisobutene, polypentenes, polymethylpentenes, and polyhexenes. Polystyrene or PS and poly(alpha-methylstyrenes), acrylonitrile-butadiene-styrene or ABS, acrylic-styrene-acrylonitrile or ASA, styrene-acrylonitrile or SAN, and styrenic block copolymers are included herein by example. Amorphous, crystalline, and semicrystalline materials are also included within the scope of this invention.

Polyvinylchloride or PVC and chloriniated polyvinylchloride or CPVC as described for this invention may be plasticized or unplasticized and may be used as a homopolymer or in copolymers incorporating the olefinics previously cited as well as in polymeric compositions with acrylonitrile, vinylidene dichloride, acrylates, methyl acrylates, methyl methacrylates, hydroxyethylacrylate, vinyl acetate, vinyl toluene, and acrylamide by way of example.

Polyesters, polyamides, polycarbonates, and polyurethanes within the scope of this invention should be formulated such that the processing temperature of the material is below the degradation point of the biomaterial. As is familiar to those skilled in the art, this can be achieved by use of copolymers within this broad family of condensation chemistry.

Polyesters useful for the present invention are of the general structural formula (OR.sub.1.0).sub.x. [(C=O)R.sub.2.(C=O)].sub.y and/or [(C=O)R.sub.1.0].sub.x. [(C=O)R.sub.2.O].sub.y. R.sub.1 and R.sub.2 herein described include aliphatic, cycloaliphatic, aromatic and pendant substituted moieties including but not limited to halogens, nitro functionalities, alkyl and aryl groups and may be the same or different. More preferably, polyesters herein described include poly(ethylene terephthalate) or PET, poly(trimethylene terephthalate) or PTT, poly(butylene terephthalate) or PBT, poly(ethylene naphthalate) or PEN, polylactide or PLA, and poly(alpha-hydroxyalkanoates) or PHA and their copolymers.

Polyamides useful for the present invention are of the general structural formula [N(H,R)R.sub.1.N(H,R)sub.x.[(C=O)R.sub.2.(C=O)].sub.y and/or [(C=O)R.sub.1.N(H,R)].sub.x.[(C=O)R.sub.2.N(H,R)].sub.y. R.sub.1 and R.sub.2 herein described include aliphatic, cycloaliphatic, aromatic and pendant substituted moieties including but not limited to halogens, nitro functionalities, alkyl and aryl groups and may be the same or different. R herein described includes but is not limited to aliphatic, cycloaliphatic, and aromatic moieties. More preferably, polyamides include polytetramethylene adipamide or nylon 4,6, polyhexamethylene adipamide or nylon 6,6, polyhexamethylene sebacamide or nylon 6,10, poly(hexamethylenediamine-co-dodecanedioic acid) or nylon 6,12, polycaprolactam or nylon 6, polyheptanolactam or nylon 7, polyundecanolactam or nylon 11, polydodecanolactam or nylon 12 and their copolymers.

Polycarbonates useful for the present invention are of the general structural formula [(C=O)OR.sub.1.O].sub.x.[(C=O)OR.sub.2.O].sub.y. R.sub.1 and R.sub.2 herein described include aliphatic, cycloaliphatic, aromatic and pendant substituted moieties including but not limited to halogens, nitro functionalities, alkyl and aryl groups. More preferably, polycarbonates include bisphenol and substituted bisphenol carbonates where bisphenol is of the structural formula HOPhC(CH.sub.3) .sub.2.PHOH or HOPhC(CH.sub.3).(CH.sub.2.CH.sub3).PhOH where Ph describes the phenyl ring and substituents include but are not limited to alkyl, cycloalkyl, aryl, halogen, and nitro functionalities. R.sub.1 and R.sub.2 may be the same or different.

Polyurethanes useful for the present invention are of the general structural formula [(C=O)OR.sub.1.N(H,R)].sub.x[(C=O)OR.sub.2.N(H,R).sub.y. R.sub.1 and R.sub.2 herein described include aliphatic, cycloaliphatic, aromatic and pendant substituted moieties including but not limited to halogens, nitro functionalities, alkyl and aryl groups. R herein described includes but is not limited to aliphatic, cycloaliphatic, and aromatic moieties. More preferably, polyurethanes described herein include polyether polyurethane and/or polyester polyurethane copolymers including methylenebis(phenylisocyanate). R.sub.1 and R.sub.2 may be the same or different.

Polyesters and copolymers, polyamide copolymers, polycarbonates and copolymers, and polyurethanes and copolymers may be comprised of at least one diol including ethylene glycol, 1,2-propylene glycol, 1,3-propylene glycol, 1,3-butanediol, 1,4-butanediol, 1,5-pentanediol, 1,3-hexanediol, 1,6-hexanediol, neopentyl glycol, decamethylene glycol, dodecamethylene glycol, 2-butyl-1,3-propanediol, 2,2-dimethyl-1,3-propanediol, 2,2-diethyl-1,3-propanediol, 2-ethyl-2-isobutyl-1,3-propanediol, 2-methyl-1,4-pentanediol, 3-methyl-2,4 -pentanediol, 3-methyl-1,5-pentanediol, 2,2,4-trimethyl-1,3-pentanediol, 2-ethyl-1,3-hexanediol, 2,2,4-trimethyl-1,6-hexanediol, 1,2-cyclohexanediol, 1,4-cyclohexanediol, 1,2-cyclohexane dimethanol, 1,3-cyclohexane dimethanol, 1,4-cyclohexane dimethanol, diethylene glycol, triethylene glycol, polyethylene glycol, dipropylene glycol, tripropylene glycol, polypropylene glycol, polytetramethylene glycol, catechol, hydroquinone, isosorbide, 1,4-bis(hydroxymethyl)-benzene, 1,4-bis(hydroxyethoxy)benzene, 2,2-bis(4-hydroxyphenyl)propane and isomers thereof.

Polyesters and copolymers, polyamide copolymers, polycarbonates and copolymers, and polyurethane copolymers may be comprised of at least one lactone or hydroxyacid including butyrolactone, caprolactone, lactic acid, glycolic acid, 2-hydroxyethoxyacetic acid, and 3-hydroxypropoxyacetic acid, 3-hydroxybutyric acid by way of example.

Polyesters and copolymers, polyamides and copolymers, polycarbonate copolymers, and polyurethane copolymers may be comprised of at least one diacid exemplary or which are phthalic acid, isophthalic acid, terephthalic acid, naphthalene-2,6-dicarboxylic acid and isomers, stilbene dicarboxylic acid, 1,3-cyclohexanedicarboxylic acid, diphenyldicarboxylic acids, succinic acid, glutaric acid, adipic acid, azelaic acid, sebacic acid, fumaric acid, pimelic acid, undecanedioic acid, octadecanedioic acid, and cyclohexanediacetic acid.

Polyesters and copolymers, polyamides and copolymers, polycarbonate copolymers, and polyurethane copolymers may be comprised of at least one diester including, by example, dimethyl or diethyl phthalate, dimethyl or diethyl isophthalate, dimethyl or diethyl terephthalate, and dimethyl naphthalene-2,6-dicarboxylate.

Polyamides and copolymers, polyester copolymers, polycarbonate copolymers, and polyurethanes and copolymers comprised of diamines including 1,3-propanediamine, 1,4-butanediamine, 1,5-pentanediamine, 1,6-hexanediamine, 1,8-octanediamine, 1,10-decanediamine, 1,12-dodcanediamine, 1,16-hexadecanediamine, phenylenediamine, 4,4'-diaminodiphenylether, 4,4'-diaminodiphenylmethane, 2,2-dimethyl-1,5-pentanediamine, 2,2,4-trimethyl-1,5-pentanediamine, and 2,2,4-trimethyl-1,6-hexanediamine are included in this invention and are not limited as described herein.

Polyamides and copolymers, polyester copolymers, polycarbonate copolymers, and polyurethane copolymers may be comprised of at least one lactam or amino acid including propiolactam, pyrrolidinone, caprolactam, heptanolactam, caprylactam, nonanolactam, decanolactam, undecanolactam, and dodecanolactam by way of example.

Polyurethanes and copolymers, polyester copolymers, polyamide copolymers, and polycarbonate copolymers may be comprised of at least one isocyanate including but not limited to 4,4'-diphenylmethane diisocyanate and isomers, toluene diisocyanate, isophorone diisocyanate, hexamethylenediisocyanate, ethylene diisocyanate, 4,4'-methylenebis(phenylisocyanate) and isomers, xylylene diisocyanate and isomers, tetramethyl xylylene diisocyanate, 1,5-naphthalenediisocyanate, 1,4-cyclohexyl diisocyanate, diphenylmethane-3,3'-dimethoxy-4,4'-diisocyanate, 1,6-hexanediisocyanate, 1,6-diisocyanato-2,2,4,4-tetramethylhexane, 1,3-bis(isocyanatomethyl)cyclohexane, and 1,10-decanediisocyanate.

Coupling agents are preferably incorporated into the formulation to confer greater compatibility of the resins for the more,polar biomaterials. The coupling agents effectively bond the biomaterials to the plastic matrix and provide enhanced dimensional stability, greater impact resistance, more efficient dispersion of the fibrous materials, reduction of creep, and reduce the water uptake and possible swelling of the intermediate pellets as well as the final products. Exemplary of these coupling agents or stabilizers are maleated polypropylene, maleated polyethylene, long-chain chlorinated paraffins or LCCP, paraffin wax, metal soaps, silanes, titanates, zirconates, and surfactants.

Water-soluble binders serve similar adhesion-promotion and can be included in the polymer biomaterial composites for the present invention. These binders confer greater solubility of the biomaterials and are particularly effective for recycle applications as demonstrated effectively in prior art. Examples of these include polyacrylamide, polyacrylic acid, polyvinyl alcohol, polyethylene glycol, polyvinylpyrrolidone, substituted cellulose, sodium carboxymethyl cellulose, sodium hydroxyethyl cellulose, sodium hydroxypropyl cellulose, and sodium carboxymethylhydroxyethyl cellulose.

Lubricants are also desirable for the present invention in that they enhance the dispersion of the biomaterials as well and reduce excessive heating due to frictional drag, effectively reducing that drag and the resulting problematic degradation and discoloration. They also facilitate reduction of agglomeration and clumping of the biomaterials. Throughput rates and surface properties are significantly modified by choice of the lubricant(s) . Silicone oil, paraffin wax, oxidized polyethylene, metal stearates, fatty acid amides, oleoyl palmitamide, and ethylene bis-stearamide are included herein by way of example.

Fillers can also be used to reduce costs and serve to modify properties as is readily understood by those skilled in the art and are included within the scope of this invention. Foaming agents including nitrogen, carbon dioxide, butane, pentane, hexane and well-described chemical foaming agents (CFA) follow as examples from prior art disclosures as well.

Consideration from prior disclosures have demonstrated that high moisture levels in the biomaterial feed can be reduced by drying techniques familiar to those skilled in the art prior to introduction into the extruder or can be reduced significantly during the feed and extrusion processes.

Moisture levels as high as 40% have been introduced into the extruder with appropriate venting to achieve acceptable product results.

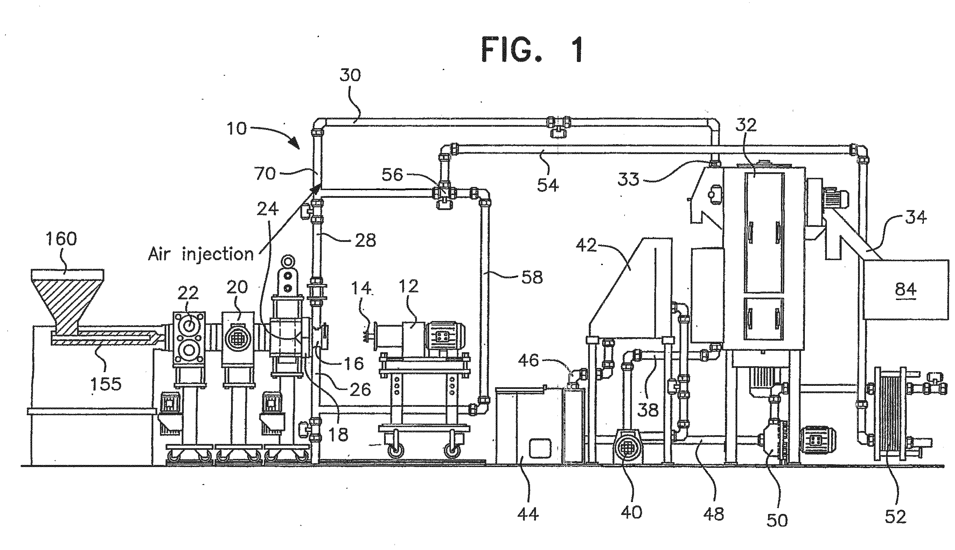

An underwater pelletizing system is shown schematically in Figure 1. The underwater pelletizing system is designated generally by reference number 10 and includes an underwater pelletizer 12, such as a Gala underwater pelletizer, with cutter hub and blades 14 exposed in the separated view from the waterbox 16 and die plate 18.

In the underwater pelletizing system 10, the polymer biomaterial composites to be processed are fed from above using at least one polymer vat or hopper 160 typically into an extruder 155 and undergo shear and heat to melt the polymer. The polymer biomaterial composites are typically extruded at temperatures less than 220°C to avoid degradation of the biomaterials. The melt may continue to feed through a gear pump 22 which provides a smooth and controlled flow rate. The polymer melt, as required, may be fed into a screen changer 20 (Figure 1) to remove any bulk or oversize solid particles or extraneous material. The melt flows into a polymer diverter valve 24 and into die holes in the die plate 18. The strands of polymer melt formed by extrusion through the die holes enter into the waterbox 16 and are cut by the rotating cutter hub and blades 14 to form the desired pellets or granules.

Prior art has demonstrated the numerous modifications and additives to the extrusion process which are useful in reducing the degradation of the extrudate thermally or oxidatively. Among these adaptations are included vacuum removal of byproducts and excess monomers, hydrolysis reduction, control of catalytic depolymerization, inhibition of polymerization catalysts, end-group protection, molecular weight enhancement, polymer chain extension, and use of inert gas purges.

Water enters the waterbox 16 through pipe 26 and rapidly removes the pellets so formed from the die face to form a pellet and water slurry. The process water circulated through the pelletizer waterbox as included in this invention is not limited in composition and may contain additives, cosolvents, and processing aids as needed to facilitate pelletization, prevent agglomeration, and/or maintain transport flow as will be understood by those skilled in the art. The pellet water slurry so formed exits the waterbox through pipe 28 and is conveyed toward the dryer 32 through slurry line 30.

In accordance with this invention, air is injected into slurry line 30 at point 70, preferably adjacent to the exit from the waterbox 16 and near the beginning of the slurry line 30. This preferred site 70 for air injection facilitates the transport of the pellets by increasing the transport rate, facilitating the aspiration of the water in the slurry, thus allowing the pellets to retain sufficient latent heat to effect the desired drying. High velocity air is conveniently and economically injected into the slurry line 30 at point 70 using conventional compressed air lines typically available at manufacturing facilities, such as with a pneumatic compressor. Other inert gases including but not limited to nitrogen may be used in accordance with this invention to convey the pellets at a high velocity as described. This high velocity air flow is achieved using the compressed gas producing a volume of flow of at least 100 meters.sup.3/hour using a standard ball valve for regulation of a pressure of at least 8 bar through the slurry line 30 which is standard pipe diameter, preferably 3.81 cm [1.5 inch] pipe diameter. To those skilled in the art, flow rates and pipe diameters will vary according to the throughput volume, level of moisture desired, and the size of the pellets. The high velocity air effectively contacts the pellet water slurry generating water vapor by aspiration, and disperses the pellets throughout the slurry line propagating those pellets at increased velocity to the dryer 32, preferably at a rate of less than one second from the waterbox 16 to the dryer exit 34. The high velocity aspiration produces a mixture of pellets and air which may approach 98-99% by volume of air.

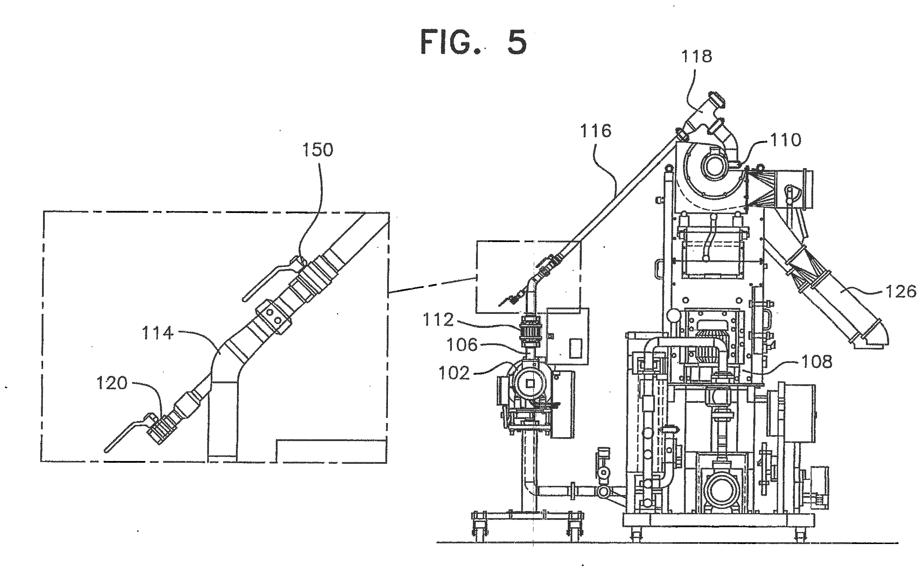

Figure 5 shows the preferred arrangement for air injection into the slurry line. The water/pellet slurry exits the pelletizer waterbox 102 into the slurry line 106 through the sight glass 112 and past the angle elbow 114 where the compressed air is injected from the valve 120 into the angled slurry line 116. The injected air, pellets and vaporized water proceed past the enlarged elbow 118, through the dryer entrance 110 and into the dryer 108. It is preferred that the air injection into the angled elbow 114 is in line with the axis of the slurry line 116 providing the maximum effect of that air injection on the pellet/water slurry resulting in constant aspiration of the mixture.

The angle formed between the vertical axis of slurry line 106 and the longitudinal axis of slurry line 116 can vary from 0' to 90' or more as required by the variance in the height of the pelletizer 102 relative to the height of the entrance 110 to the dryer 108. This difference in height may be due to the physical positioning of the dryer 108 in relation to the pelletizer 102 or may be a consequence of the difference in the sizes of the dryer and pelletizer. The preferred angle range is from 30' to 60' with a more preferred angle of 45°C. The enlarged elbow 118 into the dryer entrance 110 facilitates the transition of the high velocity aspirated pellet/water slurry from the incoming slurry line 116 into the entrance of the dryer 110 and reduces the potential for pellet agglomeration into the dryer 108.

The preferred position of the equipment as described in Figure 5 allows transport of the pellets from the pelletizer 102 to the exit of the dryer 108 in approximately one second which minimizes loss of heat inside the pellet. This is further optimized by insertion of a second valve mechanism or more preferred a second ball valve 150 after the air injection at elbow 114. This additional ball valve 150 allows better regulation of the residence time of the pellets in the slurry line 116 and reduces any vibration that may occur in the slurry line. The second ball valve 150 allows additional pressurization of the air injected into the chamber and improves the aspiration of the water from the pellet/water slurry. This becomes especially important as the size of the pellets decrease in diameter.

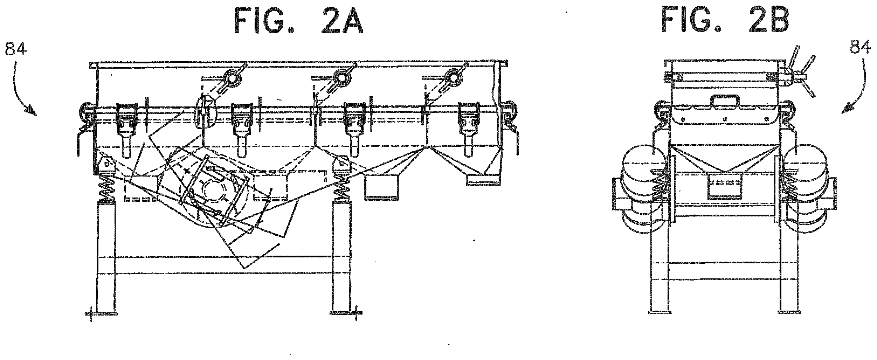

The pellets are ejected through the exit 126 of the dryer 108 and are preferably directed toward a vibratory unit, such as a vibrating conveyor 84 illustrated schematically in Figure 2a and Figure 2b. The agitation which results from the vibratory action of the vibrating conveyor 84 allows heat to be transferred between the pellets as they come in contact with other pellets and the components of the said vibrating conveyor. This allows uniformity of temperature to be achieved and results in improved, lower and more uniform moisture content of the pellets. Agitation alleviates the tendency for pellets to adhere to each other and/or to the components of the vibrating conveyor as a consequence of the increased pellet temperature.

The residence time of the pellets on the vibrating conveyor can affect the desired moisture content to be achieved. The larger the pellet the longer the residence time is expected to be. The residence time is typically about 20 seconds to about 120 seconds or longer, preferably from 30 seconds to 60 seconds, and more preferably 40 seconds to allow the pellets to dry to the desired degree and to allow the pellets to cool for handling. The larger pellets will retain more heat inside and dry more quickly than would be expected for pellets of decreasing diameter. Conversely, the larger the pellet diameter, the longer the residence time required for the pellet to cool for handling purposes. The desired temperature of the pellet for final packaging is typically lower than would be required for further processing.

Other methods of cooling or methods in addition to a vibrating conveyor can be used to allow the pellets exiting the dryer to have sufficient time to dry and subsequently cool for handling. The pellets as delivered can be packaged, stored, or transported as required for additional processing or final product manufacture including intermediate and final expansion of the pellets where applicable.

## Claims

1. A method for processing polymer biomaterial composites into pellets including the steps of extruding strands of a polymer biomaterial composite at an extrusion temperature of less than 220°C through a die plate (18) into an underwater pelletizer (12,102), cutting the composite strands into pellets in said pelletizer, transporting said composite pellets from said pelletizer as a water and pellet slurry through a slurry line to a dryer (32, 108) and drying said composite pellets,
**characterized in that**
said step of transporting said composite pellets includes injecting high velocity air into said water and pellet slurry to cause said water to aspirate from said pellets and said pellets to retain internal heat, to reduce moisture uptake by said pellets, and to expedite transport and drying of said pellets, the injection of high velocity air contacting the pellet water slurry to generate water vapor by aspiration and disperse the pellets throughout said slurry line effectively separating the pellets from the water in the slurry line, and propagating those pellets at an increased velocity to said dryer (32, 108), and said drying step includes drying said polymer biomaterial composite pellets with latent heat in said pellets and without additional heating to a moisture level in said polymer biomaterial composite pellets of less than 1%.

2. The method as claimed in claim 1, **characterized in that** said pellets exiting said dryer are kept in motion by a vibrating unit (84) during which said pellets continue drying.

3. The method as claimed in claim 1, **characterized in that** said step of injecting high velocity air into said water and pellet slurry includes injecting the air into said water and pellet slurry at a flow rate of at least 100 m³/hr, and preferably about 175m³/hr, to cause the speed of the pellets into and through said dryer to increase.

4. The method as claimed in claim 1, **characterized in that** said air is injected into said water and pellet slurry substantially in alignment with a line of travel of said slurry.

5. The method as claimed in claim 4, **characterized in that** said line of travel of said slurry turns at an angle between 30° and 60° and said air is injected at said turn.

6. The method as claimed in claim 5, **characterized in that** said residence time of said pellets in said line of travel is regulated by a ball valve (150) downstream of said air injection.

7. The method as claimed in claim 1, **characterized in that** said polymer biomaterial composite includes foamable, foamed and non-foamed composites.

8. The method as claimed in claim 1, **characterized in that** said polymer biomaterial composite has 10% to 90% biomaterial, and preferably 30% to 70% biomaterial.

9. The method as claimed in claim 8, **characterized in that** said biomaterial is selected from the group consisting of polysaccharides, including cellulosics and starches, and proteinaceous materials, including polypeptides, and any combination of the foregoing.

10. The method as claimed in claim 8, **characterized in that** said biomaterial includes fibrous particles from 10 to 900 microns, with an aspect ratio of from 1 to 50, and preferably from 2 to 20.

11. The method as claimed in claim 8, **characterized in that** said biomaterial includes powders having a particle size from 15 to 425 microns.

12. The method as claimed in claim 1, **characterized in that** said polymer is selected from the group consisting of polyolefins, substituted polyolefins, polyesters, polyamides, polyurethanes and polycarbonates.

13. The method as claimed in claim 1, **characterized in that** said polymer biomaterial composite includes one or more agents to confer greater compatibility between polymer and biomaterial.

## Patentansprüche

1. Verfahren zum Weiterverarbeiten von Polymer-Biomaterial-Verbundwerkstoffen zu Pellets, umfassend die Schritte des Extrudierens von Strängen eines Polymer-Biomaterial-Verbundwerkstoffs bei einer Extrusionstemperatur von weniger als 220 °C durch eine Lochplatte (18) in einen Unterwasserpelletierer (12, 102), Ablängen der Verbundwerkstoff-Stränge in Pellets in diesem Pelletierer, Transportieren dieser Verbundwerkstoff-Pellets von diesem Pelletierer als Wasser- und Pellet-Schlacke durch eine Schlackeleitung zu einem Trockner (32, 108), und Trocknen der Verbundwerkstoff-Pellets
**dadurch gekennzeichnet, dass**
dieser Schritt des Transportierens dieser Verbundwerkstoff-Pellets das Injizieren von Hochgeschwindigkeitsluft in diese Wasser- und Pellet-Schlacke umfasst, um zu bewirken, dass das Wasser aus den Pellets entschwindet und die Pellets ihre Eigenwärme halten, um die Aufnahme von Feuchtigkeit durch die Pellets zu verringern, und um die Trocknung und den Transport dieser Pellets zu beschleunigen, wobei das Injizieren von Hochgeschwindigkeitsluft, die mit der Pellet-Wasser-Schlacke in Kontakt kommt, um vermittels Aspiration Wasserdampf zu erzeugen, und die Pellets in dieser Schlackeleitung zu verstreuen, wodurch die Pellets in der Schlackeleitung wirksam von dem Wasser getrennt werden, und Weiterführen dieser Pellets mit einer erhöhten Geschwindigkeit an diesen Trockner (32, 108), wobei dieser Trocknungsschritt das Trocknen dieser Polymer-Biomaterial-Verbundwerkstoff-Pellets mit latenter Wärme in diesen Pellets und ohne zusätzliches Erhitzen auf einen Feuchtigkeitsgrad in diesen Polymer-Biomaterial-Verbundwerkstoff-Pellets von weniger als 1 % umfasst.

2. Verfahren nach Anspruch 1, **dadurch gekennzeichnet, dass** die Pellets, die den Trockner verlassen, durch eine Rütteleinheit (84) in Bewegung gehalten werden, währenddessen die Pellets weiter trocknen.

3. Verfahren nach Anspruch 1, **dadurch gekennzeichnet, dass** der Schritt des Injizierens der Hochgeschwindigkeitsluft in diese Wasser- und Pellet-Schlacke das Injizieren der Luft in diese Wasser- und Pellet-Schlacke mit einer Flussrate von zumindest 100 m³/h, und bevorzugt etwa 175 m³/h, umfasst, um zu bewirken, dass sich die Geschwindigkeit der Pellets in und durch diesen Trockner erhöht.

4. Verfahren nach Anspruch 1, **dadurch gekennzeichnet, dass** die Luft im Wesentlichen fluchtend mit einer Bewegungsleitung der Schlacke in die Wasser-und Pelletschlacke injiziert wird.

5. Verfahren nach Anspruch 4, **dadurch gekennzeichnet, dass** die Bewegungsleitung der Schlacke sich an einem Winkel zwischen 30° und 60° biegt und die Luft an dieser Biegung injiziert wird.

6. Verfahren nach Anspruch 1, **dadurch gekennzeichnet, dass** die Verweildauer dieser Pellets in dieser Bewegungsleitung durch ein Kugelventil (150) stromabwärts dieser Luftinjektionsvorrichtung geregelt wird.

7. Verfahren nach Anspruch 1, **dadurch gekennzeichnet, dass** dieser Polymer-Biomaterial-Verbundwerkstoff schäumbare, geschäumte und ungeschäumte Verbundwerkstoffe umfasst.

8. Verfahren nach Anspruch 1, **dadurch gekennzeichnet, dass** der Polymer-Biomaterial-Verbundwerkstoff 10% bis 90% Biomaterial aufweist, und bevorzugt 30% bis 70% Biomaterial.

9. Verfahren nach Anspruch 5, **dadurch gekennzeichnet, dass** das Biomaterial ausgewählt ist aus der Gruppe bestehend aus Polysacchariden umfassend Zellstoffe und Stärken, und proteinösen Materialien, umfassend Polypeptide und jedwede Kombination der Vorgenannten.

10. Verfahren nach Anspruch 8, **dadurch gekennzeichnet, dass** dieses Biomaterial Faserpartikel von 10 bis 900 Mikrometer mit einem Aspektverhältnis von 1 bis 50, und bevorzugt von 2 bis 20 umfasst.

11. Verfahren nach Anspruch 8, **dadurch gekennzeichnet, dass** dieses Biomaterial Pulver mit einer Partikelgröße von 15 bis 425 Mikrometer umfasst.

12. Verfahren nach Anspruch 1, **dadurch gekennzeichnet, dass** dieses Polymer ausgewählt ist aus der Gruppe bestehend aus Polyolefinen, substituierten Polyolefinen, Polyestern, Polyamiden, Polyurethanen und Polycarbonaten.

13. Verfahren nach Anspruch 1, **dadurch gekennzeichnet, dass** dieser Polymer-Biomaterial-Verbund ein oder mehr Stoffe umfasst, die zwischen Polymer und Biomaterial eine größere Kompatibilität verleihen.

## Revendications

1. Procédé destiné à traiter des composites de biomatériaux polymères en pastilles, incluant les étapes d'extruder des brins d'un composite de biomatériaux polymères à une température d'extrusion inférieure à 220 °C à travers un plateau matrice (18) dans une pastilleuse sous l'eau (12, 102), de couper les brins de composite en pastilles dans ladite pastilleuse, transporter lesdites pastilles de composite de ladite pastilleuse sous la forme d'une bouillie d'eau et de pastilles à travers une ligne de bouillie vers un sécheur (32, 108), et à sécher lesdites pastilles de composite,
**caractérisé en ce que**
ladite étape de transport desdites pastilles de composite inclut l'étape d'injection d'un air à grande vitesse dans ladite bouillie d'eau et de pastilles pour provoquer l'aspiration de ladite eau hors desdites pastilles et la rétention de chaleur interne par lesdites pastilles, afin de réduire l'absorption d'humidité par lesdites pastilles, et pour accélérer le transport et le séchage desdites pastilles, l'injection d'air à grande vitesse entrant en contact avec la bouillie d'eau et de pastilles pour générer une vapeur d'eau par aspiration et disperser les pastilles à travers une dite ligne de bouillie séparant efficacement les pastilles de l'eau dans la ligne de bouillie, et propageant ces pastilles à une vitesse accrue vers ledit sécheur (32, 108), et ladite étape de séchage inclut le séchage desdites pastilles de composite de biomatériaux polymères avec une chaleur latente dans lesdites pastilles et sans chauffage supplémentaire à un niveau d'humidité dans lesdites pastilles de composite de biomatériaux polymères inférieur à 1%.

2. Procédé selon la revendication 1, **caractérisé en ce que** les pastilles sortant du séchoir sont maintenus en mouvement par une unité vibrante (84) pendant que les pastilles continuent à sécher.

3. Procédé selon la revendication 1, **caractérisé en ce que** ladite étape d'injection de l'air à grande vitesse dans ladite bouillie d'eau et de pastilles inclut l'injection du gaz dans ladite bouillie d'eau et de pastilles à un débit d'au moins 100 m³/h, et de préférence d'au moins 175 m³/h, pour provoquer l'augmentation de la vitesse des pastilles vers et à travers ledit sécheur.

4. Procédé selon la revendication 1, **caractérisé en ce que** ladite air es injecté dans ladite bouillie d'eau et de pastilles sensiblement en alignement avec une ligne de déplacement de ladite bouillie d'eau et de pastilles.

5. Procédé selon la revendication 4, **caractérisé en ce que** le ligne du déplacement du laitier se courbe à un angle compris entre 30° et 60° et **en ce que** l'air est injecté au niveau de cette courbure.

6. Procédé selon la revendication 5, **caractérisé en ce que** ledit temps de séjour desdites pastilles dans ladite ligne de déplacement est régulé par un robinet à bille (150) en aval de ladite injection d'air.

7. Procédé selon la revendication 1, **caractérisé en ce que** ledit composite de biomatériaux polymères inclut des composites moussables, moussés et non-moussés.

8. Procédé selon la revendication 1, **caractérisé en ce que** ledit composite de biomatériaux polymères présente de 10 % à 90 % de biomatériau, et de préférence de 30 % à 70 % de biomatériau.

9. Procédé selon la revendication 8, **caractérisé en ce que** ledit biomatériau est sélectionné parmi le groupe consistant en des polysaccharides, incluant des cellulosiques et des amidons, et des matériaux protéiques, incluant des polypeptides, et une combinaison quelconque des éléments précités.

10. Procédé selon la revendication 8, **caractérisé en ce que** ledit biomatériau inclut des particules fibreuses allant de 10 à 900 microns, avec un rapport de forme allant de 1 à 50, et de préférence de 2 à 20.

11. Procédé selon la revendication 8, **caractérisé en ce que** ledit biomatériau inclut des poudres présentant une taille de particule allant de 15 à 425 microns.

12. Procédé selon la revendication 1, **caractérisé en ce que** ledit polymère est sélectionné parmi le groupe consistant en des polyoléfines, des polyoléfines substituées, des polyesters, des polyamides, des polyuréthanes et des polycarbonates.

13. Procédé selon la revendication 1, **caractérisé en ce que** ledit composite de biomatériaux polymères inclut un ou plusieurs agents destinés à conférer une compatibilité accrue entre le polymère et le biomatériau.
